# EUROPEAN PATENT SPECIFICATION

(11) **EP 2 915 598 B1**
(45) Date of publication and mention of the grant of the patent: **16.05.2018**
(21) Application number: 15157440.7
(22) Date of filing: 03.03.2015
(51) Int. Cl.: B08B 9/30, B65G 17/06, B65G 17/38, F26B 3/30, F26B 15/18, B65C 9/00

(54) **APPARATUS FOR HEATING BOTTLES**
VORRICHTUNG ZUR FLASCHENERWÄRMUNG
APPAREIL POUR LE CHAUFFAGE DE BOUTEILLES

(30) Priority: 03.03.2014 IT TO20140171
(43) Date of publication of application: 09.09.2015
(73) Proprietor: Cames S.r.l. Con Unico Socio, 12058 Santo Stefano Belbo (CN) (IT)
(72) Inventor: Colla, Giovanni, 12058 SANTO STEFANO BELBO (CN) (IT)
(74) Representative: Robba, Pierpaolo

(56) References cited:
- EP-A1- 1 357 082
- EP-A1- 2 324 936
- US-A- 1 424 850
- US-A1- 2008 142 336

## Description

### Technical Field

The present invention relates to an apparatus for heating bottled bottles. More particularly, the present invention relates to an apparatus for heating bottles which is intended for use in a bottling plant, particularly in a plant for bottling products for which filling of the bottles is effected at low temperatures.

### Prior Art

Bottling plants for large-scale productions usually comprise a series of automated apparatuses for performing the several steps of the bottling cycle, such as washing and drying the inside of the bottles, filling, corking or capping, washing and drying the outside of the bottles, labelling and packaging.

In the case of bottling of special products such as for instance sparkling and semi-sparkling wines, bottling is effected at a very low temperature, close to 0°C, because the wine is stored at this temperature.

As the subsequent labelling step takes place at room temperature, usually close to 25°C, condensate may be formed on the outer surface of the bottles, which would cause defective labelling.

In order to prevent formation of such condensate it is necessary to provide, upstream of the labelling station, a heating apparatus which brings the bottles from the filling temperature to room temperature. According to prior art, such heating is usually effected immediately after closing of the bottles, by immersing the bottles in bulk into a water-containing tank and subsequently injecting steam at high temperature into the tank, or by feeding the bottles in bulk by means of a conveyor belt through hot water jets (about 70°C) coming from above.

Heating apparatuses of this kind, in which the bottles are arranged in bulk, have remarkable drawbacks.

In such apparatuses it is indeed impossible to establish the time of exposure to the heat source for each bottle and set a predetermined exposure time equal for all the bottles. Consequently, the bottles exiting heating apparatuses of this kind will not have all the same desired temperature.

In order to overcome this drawback, apparatuses have been developed in which the bottles to be heated are fed through the heating apparatus in an aligned condition on a conveying line, for example a conveyor belt. While they advance aligned on said conveying line, the bottles are blasted by jets of high-temperature fluids, for instance water.

Owing to the fixed aligned arrangement, the order of the bottles is kept during passage through the heating apparatus and each bottle spends the same amount of time - possibly settable and adjustable - inside said apparatus. As a consequence, also the temperature of the bottles at the exit of the apparatus is substantially the same for all the bottles.

An example for this kind of solution can be found in European patent application No. EP 1357041, which discloses an apparatus for heating bottled bottles in accordance with the preamble of claim 1. However, this kind of heating apparatus, too, though allowing to obtain an orderly feeding of the bottles and a time of exposure to the heat source which is constant for all the bottles, is not free from drawbacks.

Indeed, using a high-temperature fluid for heating the bottles brings about a series of problems.

In order to attain the desired temperature variation in the bottles passing through the heating apparatus, two options are available:
- using a fluid at a very high temperature over a short exposure time;
- using a fluid at a lower temperature upon increase of the exposure time for the bottles.

Both these options entail some drawbacks.

Using a fluid at a very high temperature causes two different problems: first of all, it brings about remarkable energy costs for causing a high temperature variation in a large amount of liquid, as required for operating the apparatus; secondly, it involves the risk of deteriorating the organoleptic properties of the wine contained in the bottles.

On the other hand, if one chooses to increase the exposure time for the bottles in order to be able to use a fluid at a lower temperature, the productivity rate of the bottling plant will decrease. Moreover, in order to increase the time taken by the bottles for passing through the heating apparatus, it will be necessary to increase the length of the conveying line, with a consequent increase in the space requirements of the apparatus.

In this connection, one should consider that, in any case, the overall space requirements of the heating apparatus will be strongly affected by the need to provide boilers or similar devices for heating the fluid that is used.

Taking into account that this apparatus is intended for use in bottling plants comprising a large number of other apparatuses (intended for instance for filling, closing, washing, drying, labelling of bottles), it is clear that minimizing the space requirements of each apparatus is one of the focal points for each designer.

Also the arrangement of the heating apparatuses of the kind described above is strongly influenced by the need to arrange them near a supply source of the fluid that is used.

Finally, the disposal and/or recovery (recycling) of the fluid used for heating the bottles involves the necessity of specific measures, with a consequent increase in production and/or operation costs.

EP 2 324 936 discloses a station for a bottling plant comprising a working zone and a conveying line passing through said working zone, wherein said conveying line comprises a conveyor belt comprising a plurality of differently oriented sections providing for a meandering path in said working zone and wherein bottles advancing on said conveyor belt through said working zone are washed and dried. Jets of air, infrared rays or microwaves can be used for drying the bottles.

However, in EP 2 324 936 no heating of the bottles advancing through the working zone is provided; on the contrary, the station is stopped if during the drying of the bottles the temperature of the bottles increases.

A main object of the present invention is to overcome the aforementioned drawbacks of the prior art by providing an apparatus for heating bottles in which the production and operation costs can be kept at a minimum, the space requirements of the apparatus are minimized and its productivity is optimized.

These and other objects of the invention are achieved by an apparatus for heating bottled bottles as defined in the appended claims.

### Summary of the Invention

According to the invention, the apparatus for heating bottled bottles comprises a conveying line which extends along a meandering path through the heating zone and on which the bottles advance in an aligned manner, and infrared heating sources - namely infrared lamps - arranged along said conveying line inside said heating zone.

Owing to the fact that the apparatus according to the invention does not use any high-temperature fluid for heating the bottles, all the drawbacks related to the need of heating a fluid and of disposing and/or recovering such fluid are overcome.

In particular, thanks to the fact that it is possible to eliminate boilers for heating fluids and piping for circulating the same, the space requirements of the heating apparatus will be remarkably reduced.

The reduced number of components will also involve a remarkable reduction of the production costs for the apparatus.

In addition, said apparatus can be placed at any location, without the need of providing fluid supply sources in its vicinity.

It will be sufficient, for the operation of the apparatus, to provide an electric power source for actuating the conveying line and feeding the infrared lamps. By providing the apparatus with an electric generator it will therefore be possible to make it entirely self-operating.

According to a preferred embodiment, the conveying line inside the heating apparatus consists of a plurality of sections arranged in parallel on which the bottles to be heated advance in opposite directions, so as to reduce the longitudinal extension of the apparatus and, consequently, its overall space requirements.

In a particularly preferred embodiment of the invention, said conveying line is made as a conveyor belt whose elements are devised and mutually connected so as to minimize the curvature radius in the connecting portions between consecutive parallel sections, which allows - with a same length of the conveyor belt - to further reduce the space requirements of the apparatus as claimed.

The reduction of the space requirements of the apparatus that can be obtained in accordance with the invention allows, among other things, to encase said apparatus within a compact structure, thus reducing the noise pollution level in the environment in which the apparatus is used. In this respect it has to be noted that the low noisiness of the apparatus is also ensured by the fact that collisions between bottles are limited, owing to the fact that said bottles are aligned in an orderly manner on the conveying line.

The apparatus according to the present invention is intended for being inserted into bottling plants, upstream of a labelling station. Therefore it is possible to provide an additional conveying line that by-passes the main conveying line passing through the heating apparatus and its infrared heat sources; in this way the bottles that are being bottled can be directed alternatively to the main conveying line or to the by-pass conveying line, depending on whether heating of the bottles is deemed necessary or not.

### List of Drawings

Further characteristics and advantages of the present invention will become more apparent from the following detailed description of a preferred embodiment of the invention itself, given by way of non-limiting example with reference to the appended drawings, in which:
Figure 1 is a plan view of the apparatus according to the invention;
Figure 2 is a sectional view taken along the line A-A of Figure 1; and
Figure 3 is an enlarged view of the detail B of Figure 1.

### Detailed Description of a Preferred Embodiment

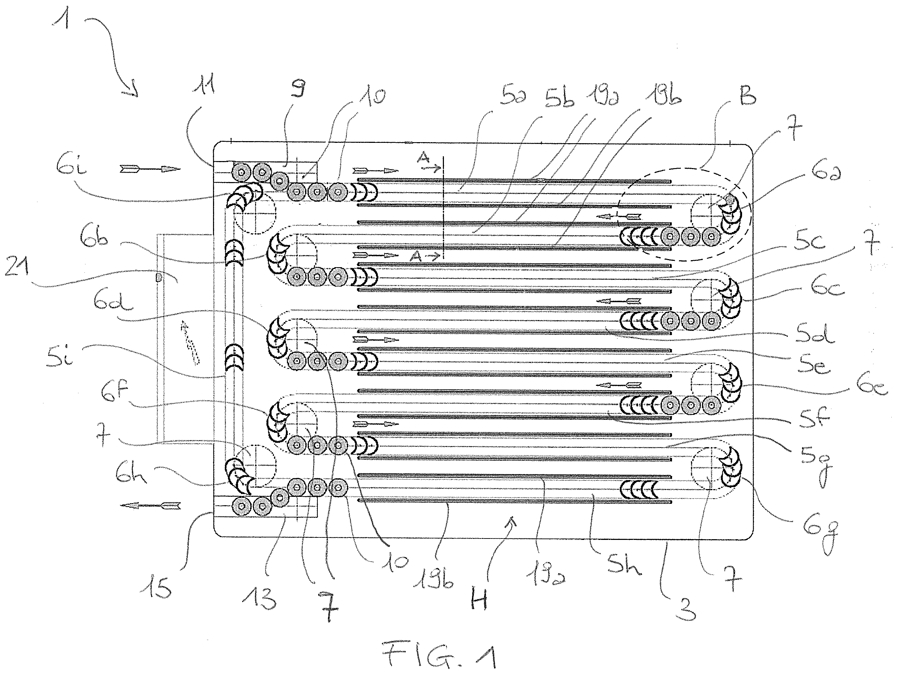

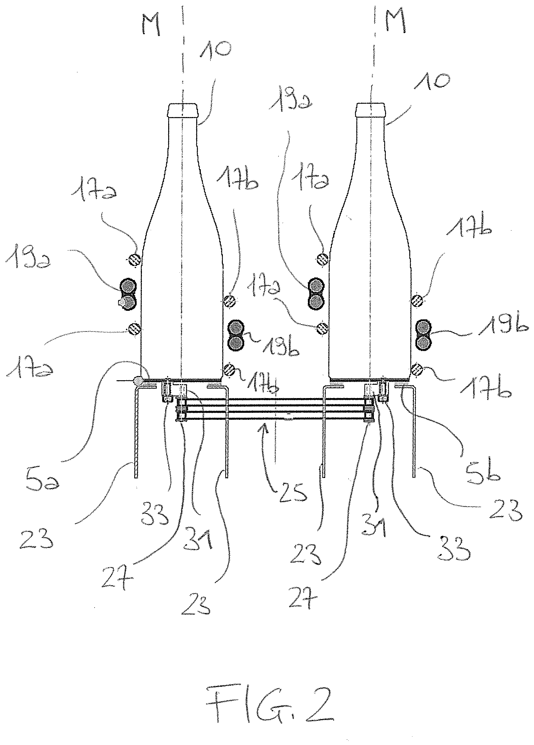

With reference at first to Figures 1 and 2, there is illustrated an apparatus for heating bottled bottles according to the invention, said apparatus being indicated as a whole with reference numeral 1.

Said apparatus 1 comprises an outer casing 3 having a substantially parallelepiped shape, comprising a base wall, side walls and an upper wall. Preferably at least one of said walls is movable or comprises a movable element so as to allow access to the inside of the casing 3, for example for the purpose of carrying out maintenance or repair works.

Inside the casing 3 there is provided a heating zone H in which bottles 10 are advanced on a conveying line in a standing and aligned manner along a meandering path.

In the embodiment shown, the conveying line comprises a conveyor belt 5 consisting of a plurality of parallel sections 5a - 5h each of which advances in the opposite direction with respect to the adjacent sections, as shown by arrows in Figure 1.

To this aim, said sections 5a - 5h are joined to one another through junctions 6a - 6g enabling the conveyor belt to effect an angle of 180° around cylindrical guides 7.

Pair of guides 17a, 17b (better visible in Figure 2) are provided on the opposite sides of each section 5a - 5h of the conveyor belt 5 for holding and guiding the bottles 10 during their advancing.

The distance of said guides 17a, 17b from the middle line M of the corresponding section of the conveyor belt - and consequently from each other - is preferably adjustable so that it can be adapted to bottles 10 of different diameter.

It is clear that the configuration described above allows - with the same distance covered by the bottles 10 inside the heating zone H - to minimize the number of components and the overall space requirements of the apparatus 1. However, it is as much evident that such configuration is not be intended as limiting and that other configurations of the conveying line are possible.

For instance, the sections of the conveyor belt 5 may be oriented in a different manner, i.e. the junctions 6a - 6g may make said conveyor belt effect angles other than 180°.

Referring again to Figure 1, in the embodiment shown the conveying line is provided as a closed loop.

For this purpose, the conveyor belt 5 comprises a connecting section 5i which connects the distal end of the last section 5h of said conveyor belt 5 (with reference to the advancing direction of the bottles 10) to the proximal end of the first section 5a (still with reference to the advancing direction of the bottles 10), said connecting section 5i being connected to said first and last sections 5a, 5h of said conveyor belt 5 by means of junctions 6h, 6i.

Said junctions 6h, 6i guide the conveyor belt 5 around corresponding cylindrical guides 7 over a desired angle, corresponding to about 90° in the illustrated example.

Due to the fact that the conveyor belt 5 moves along a closed loop, the apparatus 1 comprises an inlet conveyor belt 9, adjacent to the first section 5a of the conveyor belt 5 and extending through an inlet opening 11 of the casing 3: the bottles that are present on the conveying line of the bottling plant and are to be heated can be taken from said conveying line and moved onto the inlet conveyor belt 9; from there they are transferred, by means of appropriate means (not shown), onto the first section 5a of the conveyor belt 5.

Similarly, the apparatus 1 comprises an outlet conveyor belt 13, adjacent to the last section 5h of the conveyor belt 5 and extending through an outlet opening 15 of the casing 3: the bottles, once they have passed though the heating zone H, are transferred, by means of appropriate means (not shown), from the last section 5h of the conveyor belt 5 to the outlet conveyor belt 13 and from there they are subsequently taken and put again onto the conveying line of the bottling line.

In this connection it is to be noted that - as mentioned above - the bottling plant may comprise a by-pass for by-passing the heating apparatus when it is not necessary to heat the bottles that are being bottled; as a consequence the bottles advancing on the conveying line of the bottling plant can be selectively directed either towards the inlet conveyor belt 9 of the apparatus 1 or towards the by-pass line, depending on whether they have to be heated or not.

It is further to be noted that the closed loop configuration of the conveyor belt 5 of Figure 1 is not to be intended as limiting. It is indeed possible to provide, as an alternative, an open loop configuration in which the first section 5a of the conveyor belt 5 is prolonged to the outside of the inlet opening 11 of the casing 3 and, correspondingly, the last section 5h of the conveyor belt 5 is prolonged to the outside of the outlet opening 15 of said casing 3.

In any case, the conveying line is preferably defined so as to enable the bottles 10 to follow a meandering path substantially covering the entire area of the heating zone H of the apparatus 1, which allows to reduce the space requirements of the heating zone H and, in the end, of the apparatus 1. The means provided in the heating apparatus 1 for heating the bottles 10 advancing on the conveyor belt 5 consist of infrared heat sources in the form of infrared lamps.

Infrared radiation (IR) is the electromagnetic radiation with a frequency band of the electromagnetic spectrum lower than that of visible light, but higher than that of radio waves, i.e. with a wavelength comprised between 700 nm and 1 mm.

Infrared heating takes place by radiation, i.e. by transmission of electromagnetic waves - infrared rays - which turn into heat when they come into contact with the bodies of the bottles 10.

Said electromagnetic waves have the peculiarity that they do not heat the air, but the surfaces of the bottles 10 with which they come into contact, which allows to obtain a significant saving in energy consumption.

In addition, infrared heating is a heating of the directional type and not "at 360°", which allows to further minimize energy wastes.

Pairs of infrared lamps 19a, 19b are arranged on the opposite sides of each section 5a - 5h of the conveyor belt 5, along the entire extension of said sections 5a - 5h in the heating zone H.

Said infrared lamps are preferably arranged parallel to the plane on which the conveyor belt 5 moves and at a small height above said plane, so that they are located at the lower part of the bottles 10.

It is apparent that this arrangement is particularly advantageous because the infrared lamps 19a, 19b are located at the area in which the bottles have their largest width and the quantity of liquid to be heated is at its maximum.

In addition, as is well visible in Figure 2, the infrared lamps 19a, 19b of each pair are arranged offset relative to each other, at different heights above said conveyor belt 5, in order to optimize the heating effect.

It is in any case clear that this configuration is not to be intended as limiting and that different arrangements of the infrared heat sources can be chosen by the person skilled in the art.

In particular, it will be possible to provide mounting of said infrared lamps 19a, 19b on movable supports, whereby their distance from the middle line M of the conveyor belt 5 and/or their height above said conveyor belt 5 can be adjusted depending on the bottles to be heated. Advantageously, the use of infrared lamps allows to eliminate the need for using high-temperature fluids and thus to overcome several drawbacks of known heating apparatuses.

In particular, the elimination of boilers, piping and other hydraulic components will allow to dramatically decrease production costs and space requirements of the apparatus 1. Furthermore, said apparatus 1 will be independent of the need for the presence of fluid sources and will only require electric power supply for the infrared lights 19a, 19b.

In this respect, a cabinet 21 housing the operating and controlling systems enabling to predetermine the performances of the infrared lights 19a, 19b can be associated to the outer casing 3 of the apparatus 1, thus regulating the increase in temperature of the bottles 10 while they pass through the heating zone H.

Preferably, said cabinet 21 will house also the operating and controlling systems for the conveyor belt 5, allowing to adjust its advancing speed so that the desired time of exposure to the infrared lamps is adjusted each time.

When an electric generator is also provided inside the cabinet 21, the apparatus 1 will be entirely self-operating.

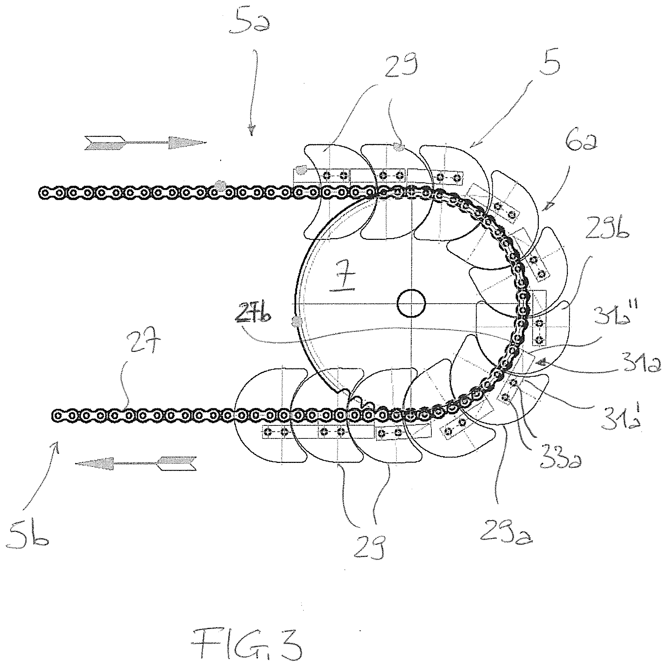

Referring now to Figures 2 and 3, according to the preferred embodiment illustrated herein, the conveyor belt 5 has a structure enabling to minimize the curvature radius of the junctions 6a - 6g, thus allowing to reduce the distance between the various sections 5a - 5h of said conveyor belt 5 and, in the end, to minimize the overall space requirements of the apparatus 1. In a manner known per se, the various sections 5a - 5h of the conveyor belt 5 are held by supports 23 mounted on the lower wall of the casing 3. Under said supports 23, a system of driven / idle pinions - indicated as a whole with the reference numeral 25 - transmits motion to a chain 27 which advances along a closed loop path and entrains the conveyor belt 5 along the same path.

According to the preferred embodiment, the conveyor belt is formed by a plurality of mutually aligned slats 29 connected to the chain 27 by means of supports 31 and pins 33.

In particular, said slats 29 are secured to said chain 27 in an offset manner both in the longitudinal direction of the conveyor belt 5 and in the transverse direction with respect to said conveyor belt.

In other words, the slats 29 are secured to the chain 27 not at the middle line M of the conveyor belt 5, but in an offset position relative to said middle line; in addition, as is well visible in Figure 3, each slat 29 is secured to the chain 27 not at a mesh of said chain aligned with said slat, but at a mesh of said chain which is located in a backward position relative thereto with respect to the advancing direction of the chain 27 itself and of the conveyor belt 5 (indicated by arrows in Figure 3).

For instance, referring in particular to Figure 3, the slat 29a is secured to the chain 27 by means of a support 31a secured to the slat 29a by means of a pair of pins 33a.

The support 31a is secured to the slat 29a at an offset position relative to the middle line of the slat 29a itself, i.e. relative to the middle line M of the conveyor belt 5.

The support 31a has a substantially "L"-shaped configuration comprising a first limb 31a' extending parallel to the advancing direction of the conveyor belt 5 and in the opposite direction with respect to the advancing direction of the conveyor belt and a second limb 31a" that extends in a direction transverse to the advancing direction of the conveyor belt 5 and thus joins said first limb to the chain 27, namely to a mesh 27b of said chain.

As is apparent from Figure 3, the first limb 31a' of the support 31a has an extension such that the mesh 27b of the chain 27 to which the second limb 31a" of said support is joined is vertically aligned not with the slat 29a but with the slat 29b adjacent to said slat 29a and following it with respect to the advancing direction of the conveyor belt 5.

Thanks to this configuration, it is possible to vary the centre of instantaneous rotation of the slat 29a and delay rotation of the slat 29a concerned (joined to the mesh 27b of the chain 27 located at a backward position relative to said slat 29a) so that the latter is synchronized with the movement of the following slat 29b, thus preventing mutual interference of the slats 29a,29b during rotation. On the other hand, formation of gaps between a slat 29a and the following one 29b, which gaps would make unstable the position of the bottles 10 on the conveyor belt 5, is simultaneously prevented.

The advantage resulting therefrom consists in a further remarkable reduction of the dimensions of the apparatus. From the above description it is evident that the invention allows to achieve the objects set forth above by allowing to obtain an extremely compact apparatus for heating bottles which has a very limited number of components.

Besides reducing the overall space requirements and manufacturing costs, this likely leads also to a reduced risk of failures and malfunctions. It is further apparent that what has been described and illustrated in detail herein has been provided merely by way of example and that several variations and modifications are within the reach of a person skilled in the art without departing from the scope of protection defined by the appended claims.

## Claims

1. Apparatus (1) for heating bottled bottles (10) from a filling temperature of about 0ºC to a temperature of about 25ºC, comprising a casing (3), provided with an inlet opening (11) and an outlet opening (15), a heating zone (H) being provided inside said casing for heating said bottles (10), and a conveying line (9,5,13), which enters said casing through said inlet opening (11), passes through said heating zone (H) and leaves said casing through said outlet opening (15), **characterized in that**
said conveying line comprises a conveyor belt (5) comprising a plurality of differently oriented sections (5a-5h) joined to one another through junctions (6a-6g), said sections providing for a meandering path in said heating zone (H), and **in that** infrared lamps (19a,19b) are arranged along said sections (5a-5h) of said conveyor belt (5) in said heating zone (H) for heating said bottled bottles (10) from a temperature of about 0°C to a temperature of about 25°C.

2. Apparatus (1) according to claim 1, wherein pairs of said infrared lamps (19a,19b) are arranged on the opposite sides of each section (5a-5h) of said conveyor belt.

3. Apparatus (1) according to claim 1 or 2, wherein said infrared lamps (19,19b) are arranged parallel to the plane on which said conveyor belt (5) moves and at a small height above said plane.

4. Apparatus (1) according to claim 2 or 3, wherein the infrared lamps (19,19b) of each pair of infrared lamps (19a, 19b) are arranged offset relative to each other, at different heights above said conveyor belt (5).

5. Apparatus (1) according to any of the preceding claims, wherein said infrared lamps (19a, 19b) are arranged on movable supports, whereby the distance of said infrared lamps from the middle line (M) of said conveyor belt (5) and/or their height above said conveyor belt (5) are adjustable.

6. Apparatus (1) according to claim 1, wherein said conveyor belt (5) comprises a plurality of parallel sections (5a-5h), each of which advances in the opposite direction with respect to the adjacent sections, said sections (5a - 5h) being joined to one another through 180° junctions (6a - 6g).

7. Apparatus (1) according to claim 1 or 6, wherein said conveyor belt (5) moves along a closed loop and it comprises a connecting section (5i) connecting the distal end of the last (5h) of said sections to the proximal end of the first (5a) of said sections and wherein said conveying line comprises an inlet conveyor belt (9), adjacent to said first section (5a) of said conveyor belt (5) and extending trough said inlet opening (11) of said casing (3) and an outlet conveyor belt (13), adjacent to said last section (5h) of said conveyor belt (5) and extending through said outlet opening (15) of said casing (3).

8. Apparatus (1) according to claim 1 or 6, wherein said conveyor belt (5) moves along an open loop and wherein the first section (5a) of said conveyor belt (5) extends trough said inlet opening (11) of said casing (3) and the last section (5h) of said conveyor belt (5) extends trough said outlet opening (15) of said casing (3).

9. Apparatus (1) according to claim 1 or 6, wherein said conveyor belt (5) is entrained in its movement by means of a chain (27) driven by driving means (25), wherein said conveyor belt is formed by a plurality of aligned slats (29) and wherein said slats (29) are secured to said chain (27) at a position that is both offset in the longitudinal direction of the conveyor belt (5) and offset in the transversal direction with respect to the conveyor belt (5).

10. Apparatus (1) according to claim 9, wherein each slat (29a) of said conveyor belt (5) is secured to said chain (27) by means of a support (31a) secured to said slat (29a) through pins (33a) and wherein said support (31a) has a substantially "L"-shaped configuration comprising a first limb (31a') that, starting from said pins (33a), extends parallel to the advancing direction of said conveyor belt (5) and in the opposite direction with respect to the advancing direction of said conveyor belt (5) and a second limb (31a") that extends in a direction transversal to the advancing direction of said conveyor belt (5) and thus joins said first limb (31a') of said support (31a) to said chain (27).

## Patentansprüche

1. Vorrichtung (1) zum Erhitzen abgefüllter Flaschen (10) von einer Fülltemperatur von ungefähr 0°C auf eine Temperatur von ungefähr 25°C, mit einem Gehäuse (3), das eine Einlassöffnung (11) und eine Auslassöffnung (15) aufweist, mit einer Heizzone (H) innerhalb des Gehäuses zum Erhitzen der Flaschen (10) und mit einer Förderbahn (9, 5, 13), die durch die Einlassöffnung (11) in das Gehäuse eintritt, durch die Heizzone (H) verläuft und das Gehäuse durch die Auslassöffnung (15) verlässt,
**dadurch gekennzeichnet, dass** die Förderbahn ein Förderband (5) aufweist, das eine Vielzahl von unterschiedlich angeordneten Abschnitten (5a - 5h) hat, die miteinander durch Verbindungen (6a - 6g) verbunden sind und mäanderförmig in der Heizzone (H) angeordnet sind, und dass Infrarotlampen (19a, 19b) entlang der Abschnitte (5a - 5h) des Förderbands (5) in der Heizzone (H) zum Heizen der abgefüllten Flaschen (10) von einer Temperatur von ungefähr 0°C auf eine Temperatur von ungefähr 25°C angeordnet sind.

2. Vorrichtung (1) nach Anspruch 1, wobei Paare der Infrarotlampen (19a, 19b) an den einander überliegenden Seiten jedes Abschnitts (5a - 5h) des Förderbandes angeordnet sind.

3. Vorrichtung (1) nach Anspruch 1 oder 2, wobei die Infrarotlampen (19a, 19b) parallel zur Transportebene des Förderbandes (5) mit geringem Abstand über der Transportebene angeordnet sind.

4. Vorrichtung (1) nach Anspruch 2 oder 3, wobei die Infrarotlampen (19a, 19b) jedes Paares von Infrarotlampen (19a, 19b) zueinander versetzt in verschiedenen Höhen über dem Förderband (5) angeordnet sind.

5. Vorrichtung (1) nach einem der vorangehenden Ansprüche, wobei die Infrarotlampen (19a, 19b) auf beweglichen Stützen angeordnet sind, wodurch der Abstand der Infrarotlampen von der Mittellinie (M) des Förderbandes (5) und/oder deren Höhe über dem Förderband (5) anpassbar ist.

6. Vorrichtung (1) nach Anspruch 1, wobei das Förderband (5) eine Vielzahl paralleler Abschnitte (5a - 5h) aufweist, von denen sich jeder in der entgegengesetzten Richtung in Bezug auf die angrenzenden Abschnitte fortbewegt, wobei die Abschnitte (5a - 5h) durch 180°-Verbindungen (6a - 6g) miteinander verbunden sind.

7. Vorrichtung (1) nach Anspruch 1 oder 6, wobei sich das Förderband (5) entlang einer geschlossenen Schleife bewegt und einen Verbindungsabschnitt (5i) aufweist, der das ferne Ende des letzten (5h) der Abschnitte mit dem nahen Ende des ersten (5a) der Abschnitte verbindet und wobei die Förderbahn ein Einlassförderband (9), das benachbart zum ersten Abschnitt (5a) des Förderbands (5) liegt und sich durch die Einlassöffnung (11) des Gehäuses (3) er-streckt, und ein Auslassförderband (13) aufweist, das benachbart zum letzten Abschnitt (5h) des Förderbands (5) liegt und sich durch die Auslassöffnung (15) des Gehäuses (3) erstreckt.

8. Vorrichtung (1) nach Anspruch 1 oder 6, wobei sich das Förderband (5) entlang einer offenen Schleife bewegt und wobei sich der erste Abschnitt (5a) des Förderbands (5) durch die Einlassöffnung (11) des Gehäuses (3) und der letzte Abschnitt (5h) des Förderbands (5) sich durch die Auslassöffnung (15) des Gehäuses (3) erstreckt.

9. Vorrichtung (1) nach Anspruch 1 oder 6, wobei das Förderband (5) mittels einer Kette (27), die durch ein Antriebsmittel (25) angetrieben ist, in seiner Bewegung mitgezogen wird, wobei das Förderband durch eine Vielzahl von hintereinander liegender Lamellen (29) gebildet ist, die an der Kette (27) an einer Position an der Kette (27) gesichert sind, die sowohl in der Längsrichtung des Förderbandes (5) als auch in der Querrichtung in Bezug zum Förderband (5) versetzt ist.

10. Vorrichtung (1) nach Anspruch 9, wobei jede Lamelle (29a) des Förderbandes (5) an der Kette (27) mittels einer Stütze (31a) befestigt ist, die durch Stifte (33a) an der Lamelle (29a) gesichert ist und im Wesentlichen "L"-Form hat, die einen ersten Schenkel (31a'), der sich von den Stiften (33a) ausgehend parallel zur Transportrichtung des Förderbandes (5) und in entgegengesetzter Richtung, bezogen auf die Transportrichtung des Förderbandes (5), erstreckt, und einen zweiten Schenkel (31a") aufweist, der sich quer zur Transportrichtung des Förderbandes (5) erstreckt und den ersten Schenkel (31a') der Stütze (31a) mit der Kette (27) verbindet.

## Revendications

1. Appareil (1) pour chauffer des bouteilles conditionnées(10) à partir d'une température de remplissage d'environ 0°C jusqu'à une température d'environ 25°C, comprenant une enceinte (3), munie d'une ouverture d'entrée (11) et d'une ouverture de sortie (15), une zone de chauffage (H) étant prévue à l'intérieur de ladite enceinte pour chauffer lesdites bouteilles (10), et une ligne de transport (9, 5, 13), qui entre dans ladite enceinte par ladite ouverture d'entrée (11), passe à travers ladite zone de chauffage (H) et quitte ladite enceinte par ladite ouverture de sortie (15), **caractérisé en ce que** ladite ligne de transport comprend une bande transporteuse (5) comprenant une pluralité de sections orientées différemment (5a-5h) assemblées les unes aux autres par l'intermédiaire de jonctions (6a-6g), lesdites sections fournissant un trajet sinueux dans ladite zone de chauffage (H), et **en ce que** des lampes infrarouges (19a, 19b) sont agencées le long desdites sections (5a-5h) de ladite bande transporteuse (5) dans ladite zone de chauffage (H) pour chauffer lesdites bouteilles conditionnées (10) à partir d'une température d'environ 0°C jusqu'à une température d'environ 25°C.

2. Appareil (1) selon la revendication 1, dans lequel des paires desdites lampes infrarouges (19a, 19b) sont agencées sur les côtés opposés de chaque section (5a-5h) de ladite bande transporteuse.

3. Appareil (1) selon la revendication 1 ou 2, dans lequel lesdites lampes infrarouges (19, 19b) sont agencées en parallèle au plan sur lequel ladite bande transporteuse (5) se déplace et à une petite hauteur au-dessus dudit plan.

4. Appareil (1) selon la revendication 2 ou 3, dans lequel les lampes infrarouges (19, 19b) de chaque paire de lampes infrarouges (19a, 19b) sont agencées décalées l'une par rapport à l'autre, à différentes hauteurs au-dessus de ladite bande transporteuse (5).

5. Appareil (1) selon l'une quelconque des revendications précédentes, dans lequel lesdites lampes infrarouges (19a, 19b) sont agencées sur des supports mobiles, ce par quoi la distance desdites lampes infrarouges à partir de la ligne médiane (M) de ladite bande transporteuse (5) et/ou leur hauteur au-dessus de ladite bande transporteuse (5) sont ajustables.

6. Appareil (1) selon la revendication 1, dans lequel ladite bande transporteuse (5) comprend une pluralité de sections parallèles (5a-5h), chacune d'elles avançant dans la direction opposée par rapport aux sections adjacentes, lesdites sections (5a-5h) étant assemblées les unes aux autres par l'intermédiaire de jonctions à 180° (6a-6g).

7. Appareil (1) selon la revendication 1 ou 6, dans lequel ladite bande transporteuse (5) se déplace le long d'une boucle fermée et elle comprend une section de liaison (5i) reliant l'extrémité distale de la dernière (5h) desdites sections à l'extrémité proximale de la première (5a) desdites sections et dans lequel ladite ligne de transport comprend une bande transporteuse d'entrée (9), adjacente à ladite première section (5a) de ladite bande transporteuse (5) et s'étendant à travers ladite ouverture d'entrée (11) de ladite enceinte (3) et une bande transporteuse de sortie (13), adjacente à ladite dernière section (5h) de ladite bande transporteuse (5) et s'étendant à travers ladite ouverture de sortie (15) de ladite enceinte (3).

8. Appareil (1) selon la revendication 1 ou 6, dans lequel ladite bande transporteuse (5) se déplace le long d'une boucle ouverte et dans lequel la première section (5a) de ladite bande transporteuse (5) s'étend à travers ladite ouverture d'entrée (11) de ladite enceinte (3) et la dernière section (5h) de ladite bande transporteuse (5) s'étend à travers ladite ouverture de sortie (15) de ladite enceinte (3).

9. Appareil (1) selon la revendication 1 ou 6, dans lequel ladite bande transporteuse (5) est entraînée dans son mouvement au moyen d'une chaîne (27) entraînée par des moyens d'entraînement (25), ladite bande transporteuse étant formée d'une pluralité de lamelles alignées (29) et lesdites lamelles (29) étant fixées à ladite chaîne (27) à une position qui est à la fois décalée dans la direction longitudinale de la bande transporteuse (5) et décalée dans la direction transversale par rapport à la bande transporteuse (5).

10. Appareil (1) selon la revendication 9, dans lequel chaque lamelle (29a) de ladite bande transporteuse (5) est fixée à ladite chaîne (27) au moyen d'un support (31a) fixé à ladite lamelle (29a) par l'intermédiaire d'axes (33a) et dans lequel ledit support (31a) a une configuration sensiblement en forme de « L » comprenant une première branche (31a') qui, en partant desdits axes (33a), s'étend en parallèle à la direction d'avancement de ladite bande transporteuse (5) et dans la direction opposée par rapport à la direction d'avancement de ladite bande transporteuse (5) et une seconde branche (31a") qui s'étend dans une direction transversale à la direction d'avancement de ladite bande transporteuse (5) et assemble ainsi ladite première branche (31a') dudit support (31a) à ladite chaîne (27) .
